# EUROPEAN PATENT SPECIFICATION

(11) **EP 1 365 892 B1**
(45) Date of publication and mention of the grant of the patent: **15.09.2004**
(21) Application number: 02729432.1
(22) Date of filing: 09.01.2002
(51) Int. Cl.: B25J 5/00, B25J 18/06

(54) **ROBOTIC DEVICE WHICH MOVES BY ALTERNATELY CONNECTING EACH OF ITS ENDS TO DOCKING STATIONS**
"ROBOTERVORRICHTUNG, DIE SICH DURCH ABWECHSELNDE VERBINDUNG JEDES IHRER ENDEN MIT DOCKSTATIONEN BEWEGT"
DISPOSITIF ROBOTIQUE SE DEPLA ANT EN CONNECTANT ALTERNATIVEMENT CHACUNE DE SES EXTREMITES A DES STATIONS D'ACCUEIL

(30) Priority: 11.01.2001 GB 0100729
(43) Date of publication of application: 03.12.2003
(73) Proprietor: Rehab Robotics Ltd, Stoke-on-Trent, Staffordshire ST4 2XN (GB); Staffordshire University, Stafford ST18 0AD (GB)
(72) Inventor: TOPPING, Michael John, c/o Rehab Robotics Ltd, Stoke-on-Trent, Staffordshire ST4 2XN (GB)
(74) Representative: Sales, Robert Reginald
(86) International application number: PCT/GB2002/000050
(87) International publication number: WO 2002/055271

(56) References cited:
- WO-A-00/04852
- BG-A- 50 640
- DE-A- 19 906 451
- PATENT ABSTRACTS OF JAPAN vol. 2000, no. 01, 31 January 2000 (2000-01-31) -& JP 11 277466 A (DIRECTOR GENERAL OF THE FIRE DEFENCE AGENCY), 12 October 1999 (1999-10-12)
- PATENT ABSTRACTS OF JAPAN vol. 014, no. 323 (M-0997), 11 July 1990 (1990-07-11) -& JP 02 109691 A (MITSUBISHI HEAVY IND LTD), 23 April 1990 (1990-04-23)
- PATENT ABSTRACTS OF JAPAN vol. 018, no. 243 (M-1602), 10 May 1994 (1994-05-10) -& JP 06 031655 A (MITSUBISHI HEAVY IND LTD), 8 February 1994 (1994-02-08)

## Description

This invention concerns improvements in or relating to robotic devices and also robotic systems, as known for example from JP-A-02,109,691.

Robotic systems and devices are used in a wide range of applications. Such arrangements often tend not to be particularly flexible, and are suited to only carrying out a single job or limited range of jobs. Such systems are also often quite bulky. Robotic systems have the potential for providing assistance to disabled persons. However, in view of the above and other disadvantages, to date such systems have generally not been usable for such applications to any significant degree.

According to the present invention there is provided a robotic device having the features according to claim 1.

The robotic device is preferably controllable, and desirably automatically selectively connects and disconnects with a connection member as required.

The connecting parts provide a power connection between connected connection parts and members, which power connection permits movement of the robotic member to take place. The power connection may connect any of electrical, pneumatic, hydraulic or mechanical power. The connecting parts preferably provide a signal connection between connected connection parts and members to provide control of the robotic device and/or an indication of the location thereof.

The connecting parts may be arranged such that a tool or other item can be selectively mounted thereon.

The robotic device may have a flexible form, and the flexible form may be provided by any of pivoted linkages, ball and socket connections or elastomeric joints.

The robotic device may comprise control means to selectively change the flexible shape thereof, and the control means may comprise any of electric motors, solenoids, smart materials, pneumatic or hydraulic devices, or mechanical means.

The robotic device may be substantially elongate, with a respective connecting part substantially at each end thereof.

The robotic device may be substantially symmetrical about a midpoint thereof.

The robotic device may be in the form of a robotic arm.

The invention also provides a robotic system, the system comprising a robotic device according to any of the preceding nine paragraphs, and a plurality of spaced docking stations, each docking station comprising a connection member connectable respectively with the connecting parts on the robotic device.

The system preferably comprises a control arrangement for sending a signal to the robotic device to cause movement thereof. The control arrangement may also identify the location of the robotic device. The control arrangement may comprise a PC or other programmable control device.

The control arrangement may permit human interaction to enable control of the system.

One or more tool stations may be provided which locate one or more tools or other items which are selectively connectable to the connecting parts on the robotic device to be operated by the robotic device.

The system may comprise a plurality of robotic devices.

The system may comprise one or more vehicles, which vehicles may be controllable by the control arrangement. Means may be provided for guiding the or one or more of the vehicles. One or more docking stations and/or tool stations may be provided on the or each vehicle.

The or each vehicle may be in the form of a wheelchair or truck.

Human interfaces may be provided at some or all of the docking stations, to provide local control of the system.

An embodiment of the present invention will now be described by way of example only and with reference to the accompanying drawings, in which:-
Figs. 1A-E are diagrammatic views of a robotic device according to the invention progressively moving from a first to a second location; and
Fig. 2 is a schematic view of a robotic system according to the invention.

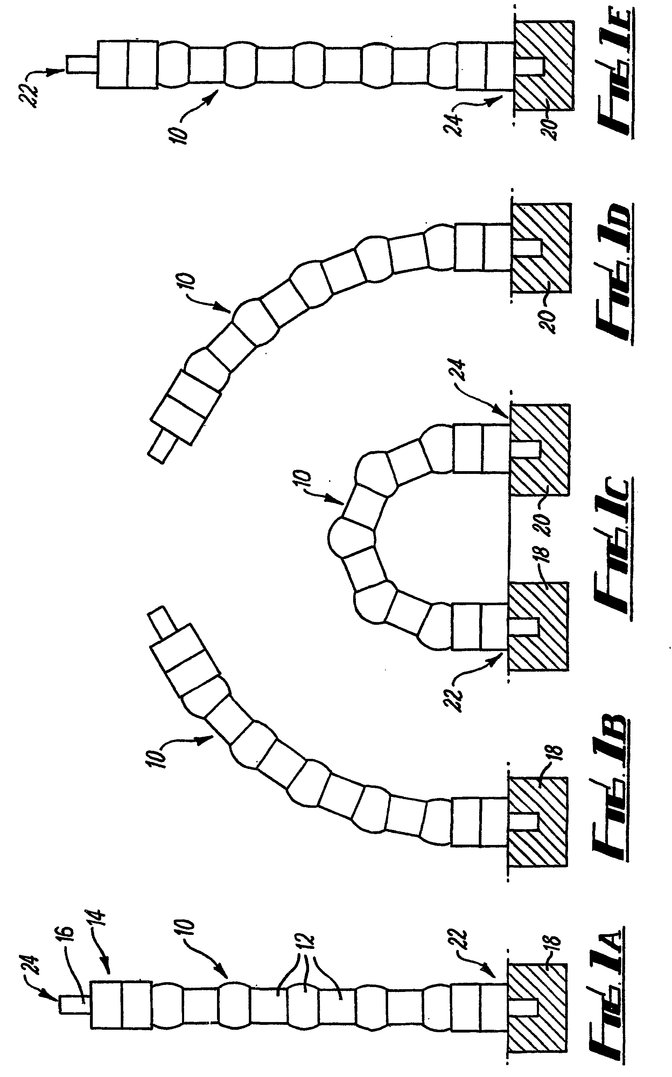

Figs. 1A-E show a robotic device in the form of a robotic arm 10. The arm 10 comprises a plurality of interconnected segments 12 which are flexible relative to each other to permit the arm 10 to be bent as shown for instance in Figs. 1B-D. The segments 12 can be connected in a number of different ways to permit flexing, such as by pivoted linkages, ball and socket connections or elastomeric joints. The segments 12 can be moved relative to each other by the provision of any of electric motors, solenoids, smart materials, pneumatic or hydraulic devices, or mechanical means.

The arm 10 is symmetrical about a midpoint and is provided with a connection part 14 at each end with a male connection 16. The connection parts 14 permit an electrical connection to be made and also a signal connection to be made. In some instances a pneumatic, hydraulic and/or mechanical connection may also be made.

Figs. 1A-E illustrate the robotic arm 10 moving from a first docking station 18 to a second such station 20. In Fig. 1A a first end 22 of the arm 10 is connected with the first docking station 18. The arm 10 is caused to bend as shown progressively in the drawings to a U-shaped configuration as shown in Fig. 1C, at which point the second end 24 connects with the second docking station 20. Once this has been completed the first end 22 can disconnect from the first docking station 18 and the arm 10 flex back to a straight alignment as shown in Fig. 1E. This arrangement permits the arm 10 to move around a network of docking stations whilst being remotely controlled and providing automatic connection and disconnection from the respective docking stations.

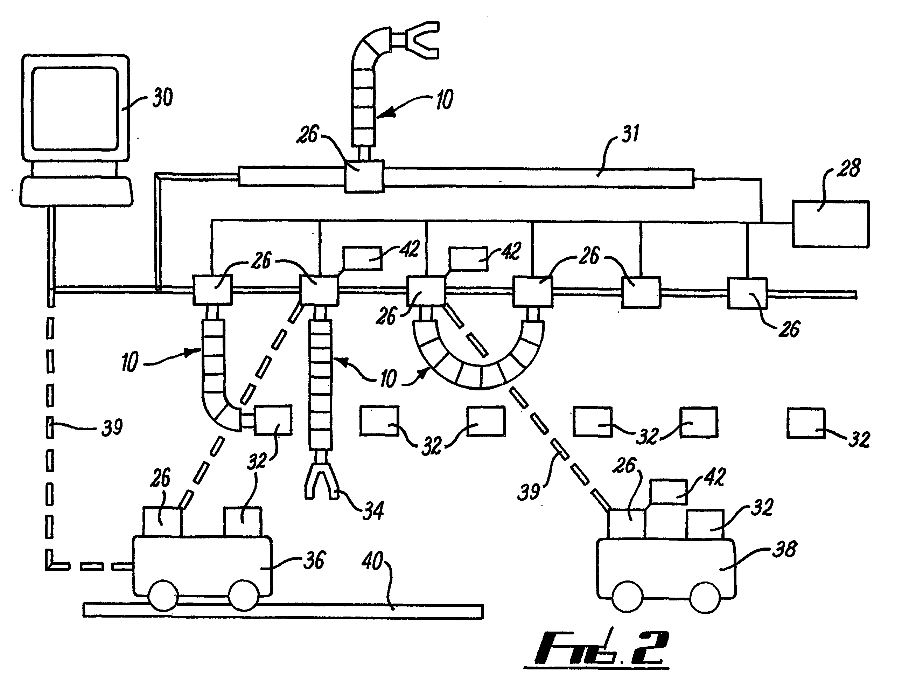

Fig. 2 shows a schematic robotic arrangement with four such arms 10 illustrated. In this instance seven such docking stations 26 are illustrated, with six provided in a line connected to a power supply 28 and to a command unit 30 in the form of a PC. One docking station 26 is illustrated movably mounted for instance on a rail 31. In the middle of Fig. 2 a one of the arms 10 is illustrated moving between a two of the docking stations 26.

A tool station 32 is provided for each of the above six docking stations 26. Each tool station 32 permits one or more tools or other implements to be held and selectively picked up by a one of the arms 10 as is illustrated at 34. Two vehicles 36,38 are also illustrated. The vehicles 36, 38 can be controlled by a remote signal such as a radio signal, as is diagrammatically shown by the broken lines 39. The first vehicle 36 is provided with a docking station 26 and tool station 32. The vehicle 36 is guided by a track 40 to be movable along a required path.

The second vehicle 38 is autonomous so can move or be driven where required. The vehicle 38 is again provided with a docking station 26 and tool station 32. The vehicle 38 is provided with a human machine interface 42 to permit a user to input a signal to the vehicle 38 for instance to drive the vehicle 38 and/or operate an arm 10, and the interface 42 may be operable by a person riding on the vehicle 38. Similar such interfaces 42 are provided connected to two of the docking stations 26, to permit local control of the system.

In use the command unit 30 can run to a pre-arranged program or can have instructions input to it at any of the interfaces 42. This will cause the arms 10 to move as required and also to pick-up tools as required to carry out required steps. Similarly the vehicles 36,38 will move as required and can pick-up arms 10 for use with particular tools as appropriate. The arrangement shown is very general and can be used in a wide range of applications. For instance, such an arrangement could be used in a house or elsewhere to provide assistance to a disabled person or persons. Jobs such as feeding could be carried out at one or more docking or tool stations. The vehicles could be used to carry items, or could be in the form of a wheelchair to transport a person where required.

The arrangement of the movable robotic arms enables floor space to be kept clear, as the docking stations for instance can be provided at a required height on the walls. This arrangement permits a relatively small number of robotic arms to be used to carry out a number of tasks.

Whilst one application is described above, the invention is usable in a wide range of different applications, and could be used for instance in a manufacturing capacity in a factory or otherwise. Various other modifications may be made to the embodiment described above. For instance, the robotic device need not be elongate with two connecting parts, and could for instance have more than two connecting parts. Different connection means could be used for instance the connection parts on the arms may be other than male members.

The vehicle guide means may be other than a track, and may move the vehicle other than along a fixed path. Whilst the command unit is indicated as a PC, other types of programmable control devices could be used.

## Claims

1. A robotic device (10), the device comprising a movable body which mounts at least two spaced connecting parts (22,24), each connecting part including power connection means which enable the connecting part to connect to another connection member such that the device can receive power therefrom to permit movement of the robotic member by itself to take place, the device having means for moving said movable body such that one of the connecting parts can be selectively connected to a first connection member (18), the body then moved such that another of the connecting parts is selectively connected to a second connection member (20) spaced from the first connection member, and thereafter said one connecting part can be disconnected from the first connection member, the body further moved, and said one or another connecting part can then be connected to a third connection member spaced from the second connection member, whereby to permit the robotic device to move around a network of connection members.

2. A robotic device according to claim 1, **characterised in that** the robotic device is controllable.

3. A robotic device according to claim 2, **characterised in that** the robotic device automatically selectively connects and disconnects with a connection member as required.

4. A robotic device according to any of the preceding claims, **characterised in that** the power connection connects any of electrical, pneumatic, hydraulic or mechanical power.

5. A robotic device according to any of the preceding claims, **characterised in that** the connecting parts provide a signal connection between connected connection parts and members to provide control of the robotic device and/or an indication of the location thereof.

6. A robotic device according to any of the preceding claims, **characterised in that** the connecting parts are arranged such that a tool or other item can be selectively mounted thereon.

7. A robotic device according to any of the preceding claim, **characterised in that** the robotic device has a flexible form.

8. A robotic device according to claim 7, **characterised in that** the flexible form is provided by any of pivoted linkages, ball and socket connections or elastomeric joints.

9. A robotic device according to any of the preceding claims, **characterised in that** the robotic device comprises control means to selectively change the flexible shape thereof.

10. A robotic device according to claim 9, **characterised in that** the control means comprises any of electric motors, solenoids, smart materials, pneumatic or hydraulic devices, or mechanical means.

11. A robotic device according to any of the preceding claims, **characterised in that** the robotic device is substantially elongate, with a respective connecting part substantially at each end thereof.

12. A robotic device according to any of the preceding claims, **characterised in that** the robotic device is substantially symmetrical about a midpoint thereof.

13. A robotic device according to any of the preceding claims, **characterised in that** the robotic device is in the form of a robotic arm.

14. A robotic system, the system comprising a robotic device according to any of the preceding claims, and a plurality of spaced docking stations, each docking station comprising a connection member connectable respectively with the connecting parts on the robotic device.

15. A robotic system according to claim 14, **characterised in that** the system comprises a control arrangement for sending a signal to the robotic device to cause movement thereof.

16. A robotic system according to claim 15, **characterised in that** the control arrangement identifies the location of the robotic device.

17. A robotic system according to claims 15 or 16, **characterised in that** the control arrangement comprises a PC.

18. A robotic system according to any of claims 15 to 17, **characterised in that** the control arrangement may permit human interaction to enable control of the system.

19. A robotic system according to any of claims 14 to 18, **characterised in that** one or more tool stations are provided which locate one or more tools or other items which are selectively connectable to the connecting parts on the robotic device to be operated by the robotic device.

20. A robotic system according to any of claims 14 to 19, **characterised in that** the system comprises a plurality of robotic devices.

21. A robotic system according to any of claims 14 to 20, **characterised in that** the system may comprise one or more vehicles.

22. A robotic system according to claim 21, **characterised in that** the or each vehicle is controllable by the control arrangement.

23. A robotic system according to claims 21 or 22, **characterised in that** means are provided for guiding the or one or more of the vehicles along a fixed path.

24. A robotic system according to any of claims 21 to 23, **characterised in that** one or more docking stations and/or tool stations are provided on the or each vehicle.

25. A robotic system according to any of claims 21 to 24, **characterised in that** the or each vehicle is in the form of a wheelchair or truck.

26. A robotic system according to any of claims 14 to 25, **characterised in that** human interfaces are provided at some or all of the docking stations, to provide local control of the system.

## Patentansprüche

1. Roboter-Vorrichtung (10), welche aufweist: einen beweglichen Körper, an dem zumindest zwei beabstandete Verbindungsteile (22, 24) montiert sind, wobei jedes Verbindungsteil Energieanschlussmittel enthält, die das Verbindungsteil in die Lage versetzen, mit einem weiteren Verbindungsglied verbunden zu werden, so dass die Vorrichtung von dort Energie empfängt, um zu ermöglichen, dass eine Bewegung des Robotergliedes von selbst erfolgt, wobei die Vorrichtung Mittel hat, um den beweglichen Körper derart zu bewegen, dass eines der Verbindungsteile mit einem ersten Verbindungsglied (18) selektiv verbunden werden kann, wobei der Körper dann derart bewegt wird, dass ein anderes der Verbindungsteile mit einem zweiten Verbindungsglied (20), das von dem ersten Verbindungsglied beabstandet ist, selektiv verbunden wird, und woraufhin das eine Verbindungsteil von dem ersten Verbindungsglied abgekoppelt werden kann, der Körper weiter bewegt wird, und das eine oder weitere Verbindungsteil dann mit einem dritten Verbindungsglied, das von dem zweiten Verbindungsglied beabstandet ist, verbunden werden kann, wodurch der Robotervorrichtung ermöglicht wird, sich in einem Netz von Verbindungsgliedern zu bewegen.

2. Roboter-Vorrichtung nach Anspruch 1, **dadurch gekennzeichnet, dass** die Roboter-Vorrichtung steuerbar ist.

3. Roboter-Vorrichtung nach Anspruch 2, **dadurch gekennzeichnet, dass** die Roboter-Vorrichtung je nach Bedarf mit einem Verbindungsglied automatisch und selektiv verbunden und von ihm abgekoppelt wird.

4. Roboter-Vorrichtung nach einem der vorhergehenden Ansprüche, **dadurch gekennzeichnet, dass** über den Energieanschluss elektrische, pneumatische, hydraulische oder mechanische Energie angeschlossen ist.

5. Roboter-Vorrichtung nach einem der vorhergehenden Ansprüche, **dadurch gekennzeichnet, dass** die Verbindungsteile eine Signalverbindung zwischen angeschlossenen Verbindungsteilen und Verbindungsgliedern ermöglichen, um eine Steuerung der Roboter-Vorrichtung und/oder eine Anzeige ihres Ortes zu ermöglichen.

6. Roboter-Vorrichtung nach einem der vorhergehenden Ansprüche, **dadurch gekennzeichnet, dass** die Verbindungsteile derart angeordnet sind, dass ein Werkzeug oder ein anderer Gegenstand daran selektiv montiert werden kann.

7. Roboter-Vorrichtung nach einem der vorhergehenden Ansprüche, **dadurch gekennzeichnet, dass** die Roboter-Vorrichtung eine flexible Gestalt hat.

8. Roboter-Vorrichtung nach Anspruch 7, **dadurch gekennzeichnet, dass** die flexible Gestalt durch schwenkbare Gestänge, Kugelgelenk-Verbindungen oder Elastomerverbindungen gebildet ist.

9. Roboter-Vorrichtung nach einem der vorhergehenden Ansprüche, **dadurch gekennzeichnet, dass** die Roboter-Vorrichtung ein Steuerungsmittel aufweist, um seine flexible Gestalt selektiv zu verändern.

10. Roboter-Vorrichtung nach Anspruch 9, **dadurch gekennzeichnet, dass** das Steuerungsmittel Elektromotoren, Magnetschalter, intelligente Materialien, pneumatische oder hydraulische Vorrichtungen oder mechanische Mittel aufweist.

11. Roboter-Vorrichtung nach einem der vorhergehenden Ansprüche, **dadurch gekennzeichnet, dass** die Roboter-Vorrichtung im wesentlichen länglich ist und im wesentlichen an jedem ihrer Enden ein jeweiliges Verbindungsteil hat.

12. Roboter-Vorrichtung nach einem der vorhergehenden Ansprüche, **dadurch gekennzeichnet, dass** die Roboter-Vorrichtung im wesentlichen symmetrisch um einen mittleren Punkt von ihr ist.

13. Roboter-Vorrichtung nach einem der vorhergehenden Ansprüche, **dadurch gekennzeichnet, dass** die Roboter-Vorrichtung die Gestalt eines Roboterarms hat.

14. Roboter-System, welches eine Roboter-Vorrichtung nach einem der vorhergehenden Ansprüche sowie eine Vielzahl beabstandeter Andockstationen aufweist, wobei jede Andockstation ein Verbindungsglied aufweist, das jeweils mit den Verbindungsteilen an der Roboter-Vorrichtung verbindbar ist.

15. Roboter-System nach Anspruch 14, **dadurch gekennzeichnet, dass** das System eine Steuerungsanordnung zum Senden eines Signals an die Roboter-Vorrichtung aufweist, um deren Bewegung zu bewirken.

16. Roboter-System nach Anspruch 15, **dadurch gekennzeichnet, dass** die Steuerungsanordnung den Ort der Roboter-Vorrichtung identifiziert.

17. Roboter-System nach Anspruch 15 oder 16, **dadurch gekennzeichnet, dass** die Steuerungsanordnung einen PC aufweist.

18. Roboter-System nach einem der Ansprüche 15 bis 17, **dadurch gekennzeichnet, dass** die Steuerungsanordnung einen menschlichen Eingriff ermöglicht, um eine Steuerung des Systems zu ermöglichen.

19. Roboter-System nach einem der Ansprüche 14 bis 18, **dadurch gekennzeichnet, dass** eine oder mehrere Werkzeugstationen vorgesehen sind, an denen ein oder mehrere Werkzeuge oder andere Gegenstände angeordnet sind, die mit den Verbindungsteilen an der Roboter-Vorrichtung selektiv verbindbar sind, um durch die. Roboter-Vorrichtung betätigt bzw. betrieben zu werden.

20. Roboter-System nach einem der Ansprüche 15 bis 19, **dadurch gekennzeichnet, dass** das System eine Vielzahl von Roboter-Vorrichtungen aufweist.

21. Roboter-System nach einem der Ansprüche 14 bis 20, **dadurch gekennzeichnet, dass** das System ein oder mehrere Fahrzeuge aufweisen kann.

22. Roboter-System nach Anspruch 21, **dadurch gekennzeichnet, dass** das oder jedes Fahrzeug durch die Steuerungsanordnung steuerbar ist.

23. Roboter-System nach Anspruch 21 oder 22, **dadurch gekennzeichnet, dass** Mittel vorgesehen sind zum Steuern des einen Fahrzeugs oder der mehreren Fahrzeuge entlang eines festgelegten Weges vorgesehen sind.

24. Roboter-System nach einem der Ansprüche 21 bis 23, **dadurch gekennzeichnet, dass** eine oder mehrere Andockstationen und/oder Werkzeugstationen auf dem oder jedem Fahrzeug vorgesehen sind.

25. Roboter-System nach einem der Ansprüche 21 bis 24, **dadurch gekennzeichnet, dass** das oder jedes Fahrzeug die Gestalt eines Rollstuhls oder eines Lastwagens hat.

26. Roboter-System nach einem der Ansprüche 14 bis 25, **dadurch gekennzeichnet, dass** menschliche Schnittstellen an einigen oder allen der Andockstationen vorgesehen sind, um eine örtliche Steuerung des Systems zu ermöglichen.

## Revendications

1. Dispositif robotisé (10), le dispositif comprenant un corps mobile qui supporte au moins deux pièces de connexion (22, 24) espacées, chaque pièce de connexion comprenant des moyens de connexion électrique permettant à la pièce de connexion de se connecter à un autre élément de connexion, de sorte que le dispositif peut recevoir de l'énergie provenant de celui-ci pour garantir que le mouvement de l'élément robotisé a lieu de lui-même, le dispositif ayant des moyens de déplacement dudit corps mobile, de sorte que l'une des pièces de connexion peut être connectée sélectivement à un premier élément de connexion (18), le corps étant alors déplacé de façon à ce qu'une autre des pièces de connexion soit connectée sélectivement à un deuxième élément de connexion (20) espacé du premier élément de connexion, puis ladite une pièce de connexion peut être déconnectée du premier élément de connexion, le corps étant en outre déplacé, et ladite une ou une autre pièce de connexion peut alors être connectée à un troisième élément de connexion espacé du deuxième élément de connexion, permettant ainsi au dispositif robotisé de se déplacer autour d'un réseau d'éléments de connexion.

2. Dispositif robotisé selon la revendication 1, **caractérisé en ce que** le dispositif robotisé peut être commandé.

3. Dispositif robotisé selon la revendication 2, **caractérisé en ce que** le dispositif robotisé se connecte et se déconnecte, comme demandé, sélectivement et automatiquement à un élément de connexion.

4. Dispositif robotisé selon l'une quelconque des revendications précédentes, **caractérisé en ce que** la connexion électrique connecte une quelconque des alimentations électrique, pneumatique, hydraulique ou mécanique.

5. Dispositif robotisé selon l'une quelconque des revendications précédentes, **caractérisé en ce que** les pièces de connexion assurent une connexion de signal entre les pièces et les éléments de connexion connectés pour permettre la commande du dispositif robotisé et/ou fournir une indication sur l'emplacement de celui-ci.

6. Dispositif robotisé selon l'une quelconque des revendications précédentes, **caractérisé en ce que** les pièces de connexion sont disposées de telle sorte qu'un outil ou un autre article peut être monté sélectivement sur celles-ci.

7. Dispositif robotisé selon l'une quelconque des revendications précédentes, **caractérisé en ce que** le dispositif robotisé présente une forme flexible.

8. Dispositif robotisé selon la revendication 7, **caractérisé en ce que** la forme flexible est assurée par une quelconque des liaisons pivotantes, connexions sphériques ou joints élastomères.

9. Dispositif robotisé selon l'une quelconque des revendications précédentes, **caractérisé en ce que** le dispositif robotisé comprend des moyens de commande pour modifier sélectivement la forme flexible de celui-ci.

10. Dispositif robotisé selon la revendication 9, **caractérisé en ce que** les moyens de commande comprennent un quelconque des moteurs électriques, solénoïdes, matériaux intelligents, dispositifs pneumatiques ou hydrauliques ou moyens mécaniques.

11. Dispositif robotisé selon l'une quelconque des revendications précédentes, **caractérisé en ce que** le dispositif robotisé est sensiblement allongé, avec une pièce de connexion respective située essentiellement à chaque extrémité de celui-ci.

12. Dispositif robotisé selon l'une quelconque des revendications précédentes, **caractérisé en ce que** le dispositif robotisé est sensiblement symétrique par rapport à un point central de celui-ci.

13. Dispositif robotisé selon l'une quelconque des revendications précédentes, **caractérisé en ce que** le dispositif robotisé a la forme d'un bras robotisé.

14. Système robotisé, le système comprenant un dispositif robotisé selon l'une quelconque des revendications précédentes, et une pluralité de stations d'amarrage espacées, chaque station d'amarrage comprenant un élément de connexion pouvant être relié respectivement aux pièces de connexion sur le dispositif robotisé.

15. Système robotisé selon la revendication 14, **caractérisé en ce que** le système comprend une ensemble de commande pour l'émission d'un signal vers le dispositif robotisé afin de provoquer le mouvement de celui-ci.

16. Système robotisé selon la revendication 15, **caractérisé en ce que** l'ensemble de commande identifie l'emplacement du dispositif robotisé.

17. Système robotisé selon les revendications 15 ou 16, **caractérisé en ce que** l'ensemble de commande comprend un ordinateur personnel (PC).

18. Système robotisé selon l'une quelconque des revendications 15 à 17, **caractérisé en ce que** l'ensemble de commande autorise l'interaction humaine afin de permettre la commande du système.

19. Système robotisé selon l'une quelconque des revendications 14 à 18, **caractérisé en ce qu'**une ou plusieurs stations d'outillage sont fournies qui localisent un ou plusieurs outils ou autres articles qui peuvent être connectés sélectivement aux pièces de connexion sur le dispositif robotisé devant être actionnées par le dispositif robotisé.

20. Système robotisé selon l'une quelconque des revendications 14 à 19, **caractérisé en ce que** le système comprend plusieurs dispositifs robotisés.

21. Système robotisé selon l'une quelconque des revendications 14 à 20, **caractérisé en ce que** le système peut comprendre un ou plusieurs véhicules.

22. Système robotisé selon la revendication 21, **caractérisé en ce que** le ou chaque véhicule peut être commandé par l'ensemble de commande.

23. Système robotisé selon les revendications 21 ou 22, **caractérisé en ce que** des moyens sont fournis pour guider le véhicule, ou un ou plusieurs des véhicules, le long d'une voie fixe.

24. Système robotisé selon l'une quelconque des revendications 21 à 23, **caractérisé en ce que** la ou les stations d'amarrage et/ou stations d'outillage sont prévues sur le véhicule ou sur chaque véhicule.

25. Système robotisé selon l'une quelconque des revendications 21 à 24, **caractérisé en ce que** le véhicule ou chaque véhicule a la forme d'un fauteuil roulant ou d'un chariot.

26. Système robotisé selon l'une quelconque des revendications 14 à 25, **caractérisé en ce que** des interfaces humaines sont fournies au niveau de certaines stations d'amarrage, ou sur toutes, pour assurer la commande locale du système.
